# EUROPÄISCHE PATENTSCHRIFT

(11) **EP 3 174 782 B1**
(45) Veröffentlichungstag und Bekanntmachung des Hinweises auf die Patenterteilung: **20.06.2018**
(21) Anmeldenummer: 15753888.5
(22) Anmeldetag: 27.07.2015
(51) Int. Cl.: B62K 15/00

(54) **ZUSAMMENFALTBARER FAHRRADRAHMEN**
FOLDABLE BICYCLE FRAME
CHÂSSIS DE VÉLO REPLIABLE

(30) Priorität: 29.07.2014 AT 501212014
(43) Veröffentlichungstag der Anmeldung: 07.06.2017
(73) Patentinhaber: Schwaiger, Thomas, 5071 Viehhausen (AT)
(72) Erfinder: Schwaiger, Thomas, 5071 Viehhausen (AT)
(74) Vertreter: KLIMENT & HENHAPEL
(86) Internationale Anmeldenummer: PCT/AT2015/050178
(87) Internationale Veröffentlichungsnummer: WO 2016/015073

(56) Entgegenhaltungen:
- EP-A2- 2 409 906
- WO-A1-2011/161657
- WO-A1-2013/016958
- DE-U1-202012 006 459

## Beschreibung

### GEBIET DER ERFINDUNG

Die vorliegende Erfindung bezieht sich auf einen zusammenfaltbaren Fahrradrahmen sowie auf ein Fahrrad umfassend einen solchen zusammenfaltbaren Fahrradrahmen, der zusammenfaltbare Fahrradrahmen umfassend ein Sitzrohr zur Aufnahme einer Sattelstütze, ein Oberrohr, ein Steuerrohr, ein Unterrohr, zwei Kettenstreben und zwei Sattelstreben, wobei ein erster lösbarer Verriegelungsmechanismus vorgesehen ist, um in einem entfalteten Zustand des Fahrradrahmens die Sattelstütze, das Sitzrohr, das Oberrohr und die Sattelstreben starr und lösbar miteinander zu verbinden und zueinander Lage zu fixieren.

### STAND DER TECHNIK

Falträder, auch bekannt als Klappräder, sind Fahrräder die über konstruktive Vorrichtungen verfügen, um das Fahrrad auf ein kleines Packmaß zusammenzufalten und/oder zu zerlegen. Dies ermöglicht einen problemlosen Transport, z.B. in öffentlichen Verkehrsmitteln, wie z.B. in der Bahn oder bei der Mitnahme im Flugzeug.

Ein typisches Beispiel für ein solches Faltrad ist ein Fahrrad mit einem Rahmen, der ca. in der Mitte über ein Scharnier mit senkrechter Schwenkachse verfügt. Somit können die beiden Teile des Rahmens, die mit dem Scharnier verbunden sind, um annähernd 180° zueinander verschwenkt werden, sodass Vorderrad und Hinterrad anschließend nebeneinander angeordnet sind. Dabei werden üblicherweise kleine Räder (typischerweise kleiner gleich 22 Zoll) verwendet, um weiter Platz zu sparen, wobei ein schlechteres/instabileres Fahrverhalten im Vergleich zu Fahrrädern mit größeren Rädern (typischerweise größer gleich 26 Zoll) in Kauf genommen wird.

Nachteilig an diesen Konstruktionen ist insbesondere, dass die Stabilität der Rahmen zu wünschen übrig lässt. Dies mag ein Grund dafür sein, dass es praktisch keine Falträder im Bereich von Mountainbikes oder Rennrädern gibt, wo naturgemäß sehr hohe Belastungen der verwendeten Fahrradrahmen auftreten.

Ein Fahrrad mit einem gattungsgemäßen zusammenfaltbaren Fahrradrahmen ist aus der EP 2409906 A2 bekannt. Weiters ist hinsichtlich des allgemeinen Stands der Technik aus der DE 202012006459 U1 ein Dreirad mit einem zusammenklappbaren Rahmen bekannt, aus der WO 2013/016958 A1 ein einfach faltbarer Fahrradrahmen und aus der WO 2011/161657 A1 ein Verschlusssystem für einen zusammenfaltbaren Fahrradrahmen.

### AUFGABE DER ERFINDUNG

Es ist daher Aufgabe der vorliegenden Erfindung einen zusammenfaltbaren Fahrradrahmen zur Verfügung zu stellen, der einerseits sehr hohen Belastungen standhält, wie sie beispielsweise beim bestimmungsgemäßen Einsatz von Mountainbikes oder Rennrädern auftreten, und andererseits eine Reduzierung des Packmaßes eines mit dem erfindungsgemäßen Fahrradrahmen ausgestatteten Fahrrads ermöglicht, die die problemlose Mitnahme als Gepäckstück, insbesondere auf Flugreisen, gewährleistet.

### DARSTELLUNG DER ERFINDUNG

Um eine möglichst hohe Stabilität des Fahrradrahmens zu gewährleisten, ist eine Form gewählt, die im Wesentlichen jener von sogenannten Diamantrahmen entspricht bzw. ähnelt und Ähnlichkeit mit einer Raute aufweist. Diese Form betrifft natürlich den Fahrradrahmen in einem entfalteten Zustand, in dem sich der Fahrradrahmen befindet, wenn ein Fahrrad mit diesem Fahrradrahmen zum Fahrradfahren bestimmungsgemäß benutzt wird. Entsprechend umfasst der erfindungsgemäße zusammenfaltbare Fahrradrahmen ein Sitzrohr zur Aufnahme einer Sattelstütze, ein Oberrohr, ein Steuerrohr zur Aufnahme eines Steuersatzes und Fixierung einer Gabel, ein Unterrohr, zwei Kettenstreben (manchmal auch Unterstreben genannt) und zwei Sattelstreben (manchmal auch Sitzstreben genannt). Um trotzdem eine substantielle Reduktion des Packmaßes des Fahrradrahmens zu erreich, ist es vorgesehen, dass zumindest der Hinterbau des Fahrradrahmens, welcher das Sitzrohr, die Sattelstreben und die Kettenstreben umfasst, gegenüber dem restlichen Rahmen verschwenkt werden kann. Dieses Verschwenken passiert jedoch nicht um eine senkrechte Achse, sondern mittels mindestens einer Drehung in einer Ebene, die im entfalteten Zustand des Fahrradrahmens durch eine Längsrichtung des Fahrradrahmens und eine Längsachse des Sitzrohrs aufgespannt wird, bzw. steht mindestens eine, der mindestens einen Drehung entsprechende Drehachse normal auf diese Ebene. Ein lösbarer Verriegelungsmechanismus bewirkt dabei eine lösbare Verbindung zwischen Hinterbau und Oberrohr.

Daher ist ein zusammenfaltbarer Fahrradrahmen vorgesehen, umfassend ein Sitzrohr zur Aufnahme einer Sattelstütze, ein Oberrohr, ein Steuerrohr, ein Unterrohr, zwei Kettenstreben und zwei Sattelstreben, wobei ein erster lösbarer Verriegelungsmechanismus vorgesehen ist, um in einem entfalteten Zustand des Fahrradrahmens die Sattelstütze, das Sitzrohr, das Oberrohr und die Sattelstreben starr und lösbar miteinander zu verbinden und zueinander Lage zu fixieren.

Um den Fahrradrahmen noch stärker zusammenfalten zu können und damit ein noch kleineres Packmaß (im zusammengefalteten Zustand des Fahrradrahmens) zu erzielen, wobei trotzdem eine hohe Stabilität des Fahrradrahmens gewährleistet ist, ist es bei einem erfindungsgemäßen zusammenfaltbaren Fahrradrahmens vorgesehen, dass weiters das Oberrohr und das Unterrohr mit dem Steuerrohr jeweils gelenkig verbunden sind und dass ein zweiter lösbarer Verriegelungsmechanismus vorgesehen ist, um im entfalteten Zustand des Fahrradrahmens das Oberrohr mit dem Unterrohr starr miteinander zu verbinden und die Lage des Oberrohrs, des Unterrohrs sowie des Steuerrohrs zueinander zu fixieren. Die gelenkige Anbindung ermöglicht es, Oberrohr und Unterrohr zu verschwenken, insbesondere relativ zum Steuerrohr.

Weiters ist bei einer bevorzugten Ausführungsform des erfindungsgemäßen zusammenfaltbaren Fahrradrahmens eine Kreuzstrebeneinheit vorgesehen, welche zwei äußere Arme, einen Mittelteil zur Aufnahme eines Tretlagers und einen inneren Arm umfasst, wobei die äußeren Arme gelenkig an das Unterrohr angebunden sind. Die gelenkige Anbindung ermöglicht es, die Kreuzstrebeneinheit und mit ihr die Kettenstreben, Sattelstreben und das Sitzrohr zu verschwenken, insbesondere relativ zu Oberrohr, Unterrohr und Steuerrohr.

Die Kreuzstrebeneinheit ist so ausgelegt, dass ein möglichst großer Schwenkbereich des Hinterbaus insgesamt, aber auch der einzelnen Komponenten des Hinterbaus realisiert werden kann. Gleichzeitig gewährleistet die Auslegung der Kreuzstrebeneinheit trotzdem eine möglichst hohe Stabilität des Fahrradrahmens. Daher ist es bei einer bevorzugten Ausführungsform des erfindungsgemäßen zusammenfaltbaren Fahrradrahmens vorgesehen, dass die äußeren Arme der Kreuzstrebeneinheit deren Mittelteil mit dem Unterrohr gelenkig verbinden, dass der Mittelteil mit den Kettenstreben starr und mit dem Sitzrohr gelenkig verbunden ist und dass der innere Arm sowohl mit dem Unterrohr als auch mit dem Mittelteil gelenkig verbunden ist. Vorzugsweise sind die äußeren Arme an einem Ende gelenkig mit dem Unterrohr verbunden und an einem anderen Ende gelenkig mit dem Mittelteil. Die gelenkige Verbindung des Mittelteils mit dem Sitzrohr ermöglicht es, das Sitzrohr insbesondere relativ zum Mittelteil zusätzlich zu verschwenken. Die gelenkige Anbindung des inneren Arms an das Unterrohr und den Mittelteil unterstützt die Verschwenkbarkeit des Mittelteils gegenüber dem Unterrohr und erhöht gleichzeitig die Stabilität der Kreuzstrebeneinheit.

Um einen ersten Verriegelungsmechanismus zu gewährleisten, für dessen Aufbau nur wenige Komponenten notwendig sind, der trotzdem eine sehr stabile und möglichst spielfreie Verbindung ermöglicht und der eine Sicherung gegen unbeabsichtigtes Öffnen umfasst, ist es bei einer bevorzugten Ausführungsform des erfindungsgemäßen zusammenfaltbaren Fahrradrahmens vorgesehen, dass der erste Verriegelungsmechanismus umfasst: eine am Oberrohr befestigte Durchführung zur Aufnahme der Sattelstütze im entfalteten Zustand des Fahrradrahmens; ein am Oberrohr befestigtes Anschlagelement mit einem Rastabschnitt und ein am Sitzrohr befestigtes Anschlagelement mit einem Rastabschnitt, wobei im entfalteten Zustand des Fahrradrahmens die beiden Anschlagelemente mittels ihrer Rastabschnitte ineinander verrastet sind; Klemmbacken, die einerseits zwischen den Sattelstreben angeordnet sind und andererseits, im entfalteten Zustand des Fahrradrahmens und bei im Sitzrohr aufgenommener Sattelstütze, zwischen der Sattelstütze und den Anschlagelementen angeordnet sind; einen Spanner, vorzugsweise Schnellspanner, wobei in einem festgezogenen Zustand des Spanners die Sattelstreben gegen die Klemmbacken gepresst sind. Die Durchführung für die Sattelstütze dient als Sicherung gegen unbeabsichtigtes Öffnen. D.h. solange die Sattelstütze in der Durchführung und im Sitzrohr aufgenommen ist, kann der Hinterbau nicht verschwenkt werden, selbst wenn der Spanner bereits gelöst sein sollte. Als Spanner kann neben einem an sich bekannten Schnellspanner natürlich auch jede andere Art von Spannern verwendet werden, im einfachsten Fall eine Schraube plus Mutter, die in entsprechenden Durchführungen bzw. Aufnahmen in den Sattelstreben angeordnet ist. Um jedoch ein schnelles Zerlegen bzw. Zusammenfalten des Fahrradrahmens zu ermöglichen, kommt vorzugsweise ein Schnellspanner zum Einsatz.

Die Rastabschnitte unterstützen eine spielfreie Verbindung. Um letztere weiter zu verbessern, ist es bei einer bevorzugten Ausführungsform des erfindungsgemäßen zusammenfaltbaren Fahrradrahmens vorgesehen, dass die Sattelstütze abgeschrägte Flächen aufweist, dass die Klemmbacken abgeschrägte Flächen aufweisen, mit welchen sie im entfalteten Zustand des Fahrradrahmens, bei im Sitzrohr aufgenommener Sattelstütze und im festgezogenen Zustand des Spanners gegen die abgeschrägten Flächen der Sattelstütze gepresst sind, wobei die abgeschrägten Flächen der Sattelstütze und der Klemmbacken so ausgelegt sind, dass die Klemmbacken im entfalteten Zustand des Fahrradrahmens, bei im Sitzrohr aufgenommener Sattelstütze und im festgezogenen Zustand des Spanners außerdem gegen das Anschlagelement des Oberrohrs und gegen das Anschlagelement des Sitzrohrs gepresst sind. Durch dieses Pressen wird eine im Wesentlichen spielfreie Verbindung zwischen Oberrohr, Sitzrohr und Sattelstütze bewirkt. Bei der Auslegung der abgeschrägten Flächen der Sattelstütze und der Klemmbacken hat der Fachmann viele Möglichkeiten.

Im einfachsten Fall sind die abgeschrägten Flächen der Klemmbacken eben ausgeführt und schließen mit der Längsrichtung des Fahrradrahmens einen Winkel von 45° ein, wobei die abgeschrägten Flächen der Sattelstütze parallel zu den abgeschrägten Flächen der Klemmbacken verlaufen. Freilich können aber auch ebene abgeschrägte Flächen vorgesehen sein, die einen anderen Winkel mit der Längsachse des Fahrradrahmens einschließen, um die parallel zur Längsrichtung des Fahrradrahmens wirkende Kraftkomponente zu variieren, wobei die Kraft durch das Festziehen des Spanners bewirkt wird. Weiters können ebene abgeschrägte Flächen vorgesehen sein, die zusätzlich auch gegenüber der Längsachse des Sitzrohrs verkippt sind. Schließlich ist es vorstellbar, dass die abgeschrägten Flächen zumindest abschnittsweise gekrümmt sind, um gezielt einen Teil der durch das Festziehen des Spanners bewirkten Kraft auf Kraftkomponenten aufzuteilen und zu variieren, die in Richtung des Anschlagelements des Oberrohrs und in Richtung des Anschlagelements des Sitzrohrs weisen.

Um einen zweiten Verriegelungsmechanismus zu gewährleisten, für dessen Aufbau nur wenige Komponenten notwendig sind und der trotzdem eine sehr stabile und möglichst spielfreie Verbindung ermöglicht, ist es bei einer bevorzugten Ausführungsform des erfindungsgemäßen zusammenfaltbaren Fahrradrahmens vorgesehen, dass der zweite Verriegelungsmechanismus umfasst: eine Strebe, die vorzugsweise im Wesentlichen V-, U- oder L-förmig ausgebildet ist und an zwei Befestigungsstellen des Oberrohrs mit diesem starr verbunden ist, wobei die Befestigungsstellen in einer Längsrichtung des Fahrradrahmens gesehen hintereinander angeordnet sind einen zweiten Spanner, vorzugsweise zweiten Schnellspanner, der im entfalteten Zustand des Fahrradrahmens in einem Verriegelungsschlitz der Strebe des Oberrohrs angeordnet ist, wobei im entfalteten Zustand des Fahrradrahmens und in einem festgezogenen Zustand des zweiten Spanners das Unterrohr gegen die Strebe des Oberrohrs gepresst ist. Durch das Festziehen des zweiten Spanners wird eine im Wesentlichen spielfreie Verbindung zwischen Oberrohr, Unterrohr und Steuerrohr erzielt. Bei geöffnetem Spanner können hingegen Oberrohr und/oder Unterrohr so verschwenkt werden, dass der zweite Spanner nicht länger im Verriegelungsschlitz angeordnet ist bzw. aus diesem heraus bewegt wird.

Bei einer bevorzugten Ausführungsform werden hierbei Oberrohr und Unterrohr aufeinander zu bewegt. Daher ist es bei einer besonders bevorzugten Ausführungsform des erfindungsgemäßen zusammenfaltbaren Fahrradrahmens vorgesehen, dass das Unterrohr zwei Arme aufweist, zwischen denen im entfalteten Zustand des Fahrradrahmens die Strebe des Oberrohrs abschnittsweise angeordnet ist, und dass im entfalteten Zustand des Fahrradrahmens und im festgezogenen Zustand des zweiten Spanners beide Arme des Unterrohrs gegen die Strebe des Oberrohrs gepresst sind. Vorzugsweise bleibt in diesem Fall die Strebe des Oberrohrs stets zumindest abschnittsweise zwischen den Armen des Unterrohrs angeordnet, auch bei geöffnetem bzw. gelöstem zweiten Verriegelungsmechanismus bzw. im zusammengeklappten Zustand des Fahrradrahmens.

Um die Stabilität des Fahrradrahmens weiter zu erhöhen und insbesondere dann, wenn auch das Sitzrohr gegenüber dem Mittelteil der Kreuzstrebeneinheit verschwenkbar ist, auszuschließen, dass das Sitzrohr verschwenkt werden kann, bevor der gesamte Hinterbau verschwenkt wurde, ist es bei einer besonders bevorzugten Ausführungsform des erfindungsgemäßen zusammenfaltbaren Fahrradrahmens vorgesehen, dass der mittlere Arm der Kreuzstrebeneinheit einen Einrastabschnitt aufweist, dass das Sitzrohr einen Einrastabschnitt aufweist und dass im entfalteten Zustand des Fahrradrahmens die beiden Einrastabschnitte ineinander verrastet sind. Erst durch die Drehung des Hinterbaus wird die Verrastung gelöst, sodass vor der Drehung/Verschwenkung des Hinterbaus das Sitzrohr nicht gegenüber dem Mittelteil verschwenkt werden kann.

Um den Schwenkbereich des Hinterbaus insgesamt, aber auch der einzelnen Komponenten des Hinterbaus zu optimieren und gleichzeitig aus Gründen der Benutzerfreundlichkeit die Schwenkbewegungen auf Drehbewegungen in einer Ebene zu beschränken, ist es bei einer bevorzugten Ausführungsform des erfindungsgemäßen zusammenfaltbaren Fahrradrahmens vorgesehen, dass die äußeren Arme der Kreuzstrebeneinheit am Unterrohr um eine erste Drehachse drehbar gelagert sind, dass die äußeren Arme der Kreuzstrebeneinheit am Mittelteil der Kreuzstrebeneinheit um eine zweite Drehachse drehbar gelagert sind, dass das Sitzrohr am Mittelteil der Kreuzstrebeneinheit um eine dritte Drehachse drehbar gelagert ist, dass der innere Arm der Kreuzstrebeneinheit am Mittelteil der Kreuzstrebeneinheit um eine vierte Drehachse drehbar gelagert ist, dass der innerer Arm der Kreuzstrebeneinheit am Unterrohr um eine fünfte Drehachse drehbar gelagert ist, und dass die erste Drehachse, die zweite Drehachse, die dritte Drehachse, die vierte Drehachse und die fünfte Drehachse parallel zu einander sind.

Analog ist es bei einer bevorzugten Ausführungsform des erfindungsgemäßen Fahrradrahmens vorgesehen, den Schwenkbereich von Oberrohr und Unterrohr zu optimieren und gleichzeitig aus Gründen der Benutzerfreundlichkeit sämtliche Schwenkbewegungen auf Drehbewegungen in einer Ebene zu beschränken. Gleichzeitig soll diese Auslegung zu einer möglichst hohen Stabilität des Fahrradrahmens beitragen. Daher ist es bei einer bevorzugten Ausführungsform des erfindungsgemäßen zusammenfaltbaren Fahrradrahmens vorgesehen, dass das Unterrohr relativ zum Steuerrohr um eine sechste Drehachse drehbar gelagert ist, dass das Oberrohr relativ zum Steuerrohr um eine siebente Drehachse drehbar gelagert ist und dass die sechste Drehachse und die siebente Drehachse parallel zur ersten Drehachse sind.

Das Packmaß des Fahrradrahmens im zusammengeklappten Zustand kann weiter reduziert werden, indem auch noch die Sattelstreben und Kettenstreben aufeinander zu bewegt werden können. Daher ist es bei einer bevorzugten Ausführungsform des erfindungsgemäßen zusammenfaltbaren Fahrradrahmens vorgesehen, dass die Sattelstreben mit den Kettenstreben gelenkig verbunden sind.

Wiederum ist es bei einer bevorzugten Ausführungsform des erfindungsgemäßen Fahrradrahmens vorgesehen, den Schwenkbereich zwischen Sattelstreben und Kettenstreben zu optimieren und gleichzeitig aus Gründen der Benutzerfreundlichkeit sämtliche Schwenkbewegungen auf Drehbewegungen in einer Ebene zu beschränken. Daher ist es bei einer bevorzugten Ausführungsform des erfindungsgemäßen zusammenfaltbaren Fahrradrahmens vorgesehen, dass die Sattelstreben relativ zu den Kettenstreben um eine achte Drehachse drehbar gelagert sind, wobei die achte Drehachse parallel zur ersten Drehachse ist.

Analog zum oben Gesagten ist erfindungsgemäß ein Fahrrad mit einem erfindungsgemäßen zusammenfaltbaren Fahrradrahmen vorgesehen, das Fahrrad umfassend ein vorderes Laufrad und ein hinteres Laufrad, eine Gabel mit einem Gabelschaft sowie einen Lenker und einen Lenkervorbau, der Lenker und Gabelschaft verbindet. Die Laufräder können dabei Größen haben, die für Mountainbikes typisch sind, also insbesondere 26 bis 29 Zoll, oder die für Rennräder typisch sind, also meist 28 Zoll. Um das Fahrrad mit kleinem Packmaß zu transportieren, beispielsweise mit dem Flugzeug, werden die Laufräder demontiert und wird dann der Fahrradrahmen zusammengefaltet.

Um ein besonders kleines Packmaß des Fahrrads zu ermöglichen, ist es bei einer bevorzugten Ausführungsform des erfindungsgemäßen Fahrrads vorgesehen, dass ein Schnellspanner vorgesehen ist, um den Lenker mit Lenkervorbau am Gabelschaft lösbar zu fixieren. Dies ermöglicht es, für den Transport auch noch den Lenker rasch abzumontieren. Sattelstütze mit Sattel sowie Lenker samt Vorbau können vorzugsweise in Freiräumen zwischen den einzelnen Komponenten des Fahrradrahmens im zusammengeklappten Zustand platzsparend verstaut werden.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Seitenansicht eines Fahrrads mit einem erfindungsgemäßen Fahrradrahmen
- Fig. 2: eine vergrößerte Ansicht des Details DA1 aus Fig. 1
- Fig. 3: eine Schnittansicht gemäß der Schnittlinie A-A aus Fig. 2 mit einem geöffneten Spanner
- Fig. 4: eine Schnittansicht gemäß der Schnittlinie A-A aus Fig. 2 mit festgezogenem Spanner
- Fig. 5: eine vergrößerte Ansicht des Details DA2 aus Fig. 1
- Fig. 6: eine Schnittansicht gemäß der Schnittlinie B-B aus Fig. 5 mit einem geöffneten zweiten Spanner
- Fig. 7: eine Schnittansicht gemäß der Schnittlinie B-B aus Fig. 5 mit festgezogenem zweiten Spanner
- Fig. 8: eine vergrößerte Ansicht des Details DA3 aus Fig. 1
- Fig. 9: eine Schnittansicht analog zu Fig. 8
- Fig. 10: den erfindungsgemäßen Fahrradrahmen mit einem gelösten ersten Verriegelungsmechanismus
- Fig. 11: den Fahrradrahmen aus Fig. 10 nach einer Verschwenkung eines Hinterbaus des Fahrradrahmens
- Fig. 12: den Fahrradrahmen aus Fig. 11 mit einem gelösten zweiten Verriegelungsmechanismus, einem verschwenkten Oberrohr sowie einem verschwenkten Unterrohr
- Fig. 13: den Fahrradrahmen aus Fig. 12 nach einer weiteren Schwenkbewegung des Hinterbaus
- Fig. 14: den Fahrradrahmen aus Fig. 13 nach Schwenkbewegungen des Sitzrohrs und der Sattelstreben
- Fig. 15: den erfindungsgemäßen Fahrradrahmen in einem (vollständig) zusammengefalteten Zustand, also den Fahrradrahmen aus Fig. 14 nach einer abschließenden Schwenkbewegung von Oberrohr und Unterrohr

### WEGE ZUR AUSFÜHRUNG DER ERFINDUNG

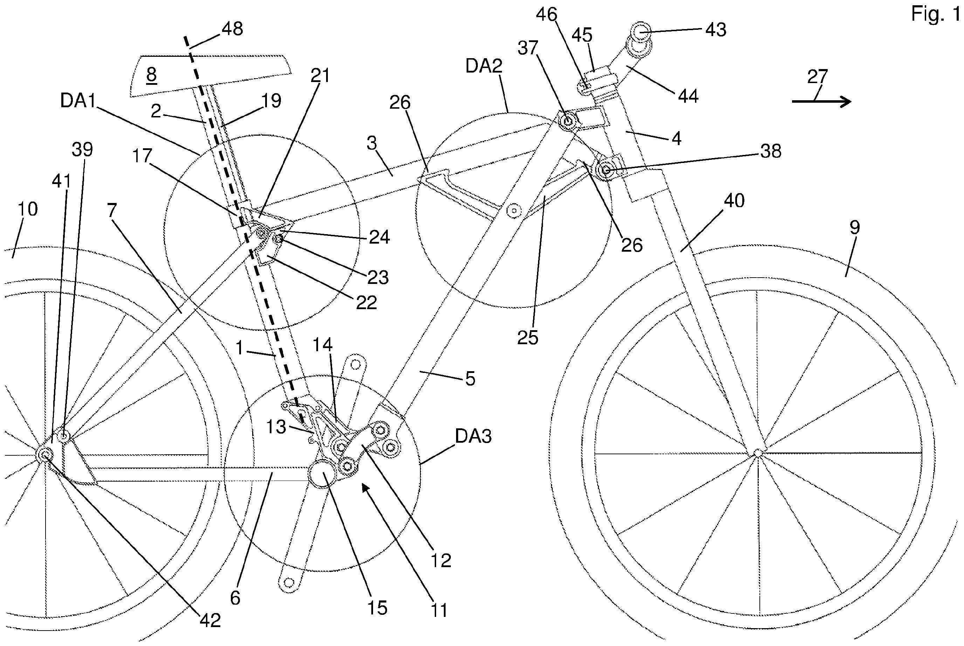

In der Seitenansicht der Fig. 1 ist ein Fahrrad mit einem erfindungsgemäßen zusammenfaltbaren Fahrradrahmen zu sehen, wobei das Fahrrad betriebsbereit ist, d.h. der Fahrradrahmen ist nicht in einem zusammengefalteten, sondern in einem entfalteten Zustand. Die Form des Fahrradrahmens ist annähernd rautenförmig. Der Fahrradrahmen umfasst ein Sitzrohr 1 zur Aufnahme einer Sattelstütze 2 mit einem Sattel 8, ein Oberrohr 3, ein Steuerrohr 4 zur Aufnahme eines Steuersatzes (nicht dargestellt) und Fixierung einer Gabel 40, ein Unterrohr 5, zwei Kettenstreben 6 und zwei Sattelstreben 7.

Die Gabel 40 umfasst einen Gabelschaft 45, an welchem ein Lenkervorbau 44 samt Lenker 43 mittels eines Schnellspanners 46 befestigt ist.

Die Gabel 40 führt ein vorderes Laufrad 9. Ein hinteres Laufrad 10 ist mit einer Achse 42 in Ausfallenden 41 angeordnet, wobei die Ausfallenden 41 sind mit den Sattelstreben 7 und den Kettenstreben 6 verbunden. Das vordere Laufrad 9 und das hintere Laufrad 10 werden vorzugsweise mit Schnellspannern fixiert (nicht dargestellt).

Der Fahrradrahmen erstreckt sich im entfalteten Zustand entlang einer Längsrichtung 27, wobei in Längsrichtung 27 gesehen die Laufräder 9, 10 hintereinander angeordnet sind. Die Längsrichtung 27 und eine Längsachse 48 des Sitzrohrs 1 definieren eine Ebene, in welcher sämtliche Dreh- bzw. Schwenkbewegungen, die für das Zusammenfalten (und natürlich auch für das Entfalten) notwendig sind, stattfinden. Bzw. steht die Achse 42 normal auf diese Ebene.

Ein Hinterbau des Fahrradrahmens umfasst das Sitzrohr 1, die Sattelstreben 7 sowie die Kettenstreben 6. Letztere sind an einem Ende starr mit einem Tretlager 15 verbunden.

Um beim Zusammenfalten des Fahrradrahmens das Verschwenken des Hinterbaus zu ermöglichen, ist eine Kreuzstrebeneinheit 11 vorgesehen, die das Unterrohr 5, das Sitzrohr 1 und die Kettenstreben 6 miteinander verbindet. Die Kreuzstrebeneinheit 11 weist hierzu zwei äußere Arme 12, einen Mittelteil 13 zur Aufnahme des Tretlagers 15 sowie einen inneren Arm 14 auf, wobei die äußeren Arme 12 und der innere Arm 14 mit dem Unterrohr 5 und dem Mittelteil 13 gelenkig verbunden sind.

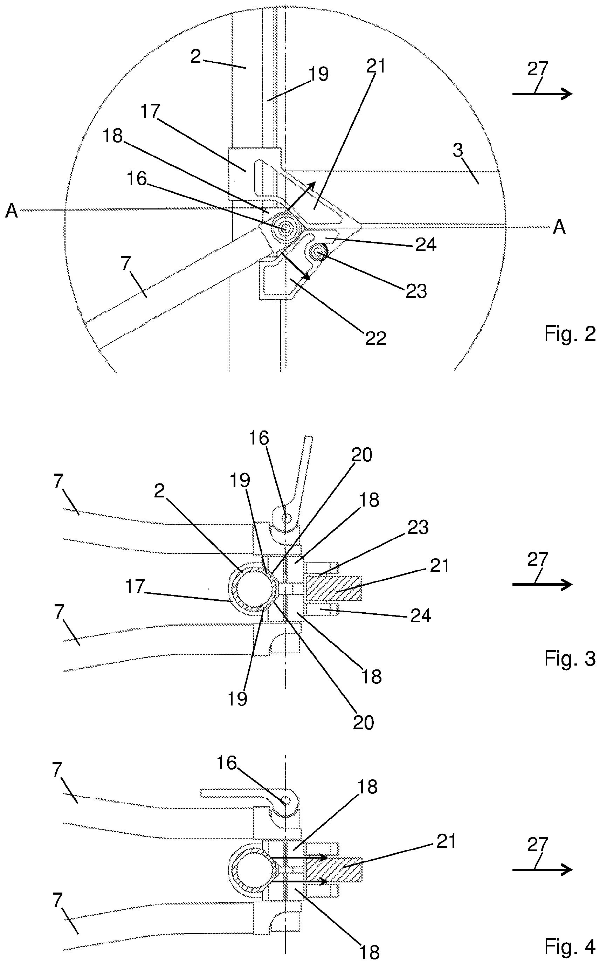

Der Fahrradrahmen wird im entfalteten Zustand jedenfalls durch einen ersten Verriegelungsmechanismus fixiert, mit dem Oberrohr 3, Sattelstütze 2, Sitzrohr 1 und Sattelstreben 7 starr miteinander und wieder einzeln voneinander lösbar verbunden und zueinander Lage fixiert werden können. Fig. 2 zeigt eine vergrößerte Ansicht des Details DA1 aus Fig. 1. Es ist gut erkennbar, dass am Oberrohr 3 eine Durchführung 17 befestigt ist, die zum ersten Verriegelungsmechanismus gehört und in der im entfalteten Zustand des Fahrradrahmens die Sattelstütze 2 aufgenommen ist, wenn die Sattelstütze 2 im Sitzrohr 1 angeordnet ist. Die Sattelstütze 2 fungiert somit als Sicherung, d.h. solange die Sattelstütze 2 im Sitzrohr 1 und der Durchführung 17 aufgenommen ist, kann der Hinterbau nicht vom Oberrohr 3 weggeschwenkt werden, insbesondere nicht das Sitzrohr 1.

Weiters umfasst der erste Verriegelungsmechanismus ein am Oberrohr 3 befestigtes Anschlagelement 21 mit einem Rastabschnitt 23 und ein am Sitzrohr 1 befestigtes Anschlagelement 22 mit einem Rastabschnitt 24, wobei im gezeigten entfalteten Zustand des Fahrradrahmens die beiden Anschlagelemente 21, 22 mittels ihrer Rastabschnitte 23, 24 ineinander verrastet sind. Im gezeigten Ausführungsbeispiel ist dabei der Rastabschnitt 23 stiftförmig ausgeführt, und der Rastabschnitt 24 ist als Ausnehmung des Anschlagelements 22 ausgeführt, wobei im entfalteten Zustand der Stift in der Ausnehmung angeordnet ist. Darüberhinaus weisen die Anschlagelemente 21, 22 plane Abschnitte auf, die im gezeigten Ausführungsbeispiel im entfalteten Zustand im Wesentlichen parallel zum Oberrohr 3 verlaufen und aufeinander aufliegen, um die Stabilität des Fahrradrahmens weiter zu erhöhen.

Weiters umfasst der erste Verriegelungsmechanismus Klemmbacken 18, die einerseits zwischen den Sattelstreben 7 angeordnet sind und andererseits, im entfalteten Zustand des Fahrradrahmens und bei im Sitzrohr 1 aufgenommener Sattelstütze 2, zwischen der Sattelstütze 2 und den Anschlagelementen 21, 22 angeordnet sind.

Schließlich umfasst der erste Verriegelungsmechanismus einen Schnellspanner 16, der durch Ausnehmungen/Durchführungen an den Enden der Sattelstreben durchgeführt ist.

Die Schnittansicht der Fig. 3 illustriert die Situation bei geöffnetem Schnellspanner 16. In diesem Fall kann es zwar zu einer Berührung der Klemmbacken 18 mit der Sattelstütze 2 und den Anschlagelementen 21, 22 kommen, doch wird kein oder nur ein vernachlässigbarer Druck durch die Klemmbacken 18 auf die Sattelstütze 2 bzw. auf die Anschlagelemente 21, 22 ausgeübt.

Die Schnittansicht der Fig. 4 zeigt die Situation bei festgezogenem Schnellspanner 16. Die Enden der Sattelstreben 7 drücken gegen die Klemmbacken 18, wodurch die Klemmbacken 18 wiederum gegen die Sattelstütze 2 drücken und diese fixieren. Dabei liegen die Klemmbacken 18 mit abgeschrägten Flächen 20 an entsprechenden, parallel verlaufenden abgeschrägten Flächen 19 der Sattelstütze 2 auf. Im gezeigten Ausführungsbeispiel sind die abgeschrägten Flächen 19, 20 als plane Flächen ausgeführt, die mit der Längsrichtung 27 einen Winkel von ca. 45° einschließen. Dies bewirkt eine Komponente der durch den festgezogenen Schnellspanner 16 verursachten Kraft parallel zur Längsrichtung 27, was in Fig. 4 durch die eingezeichneten Pfeile angedeutet ist. Folglich drücken die Klemmbacken 18 nicht nur gegen die Sattelstütze 2, sondern auch gegen die Anschlagelemente 21 und 22, was in Fig. 2 durch die eingezeichneten Pfeile angedeutet ist. Dies gewährleistet eine im Wesentlichen spielfreie Verbindung zwischen Oberrohr 3, Sitzrohr 1, Sattelstütze 2 und Sattelstreben 7.

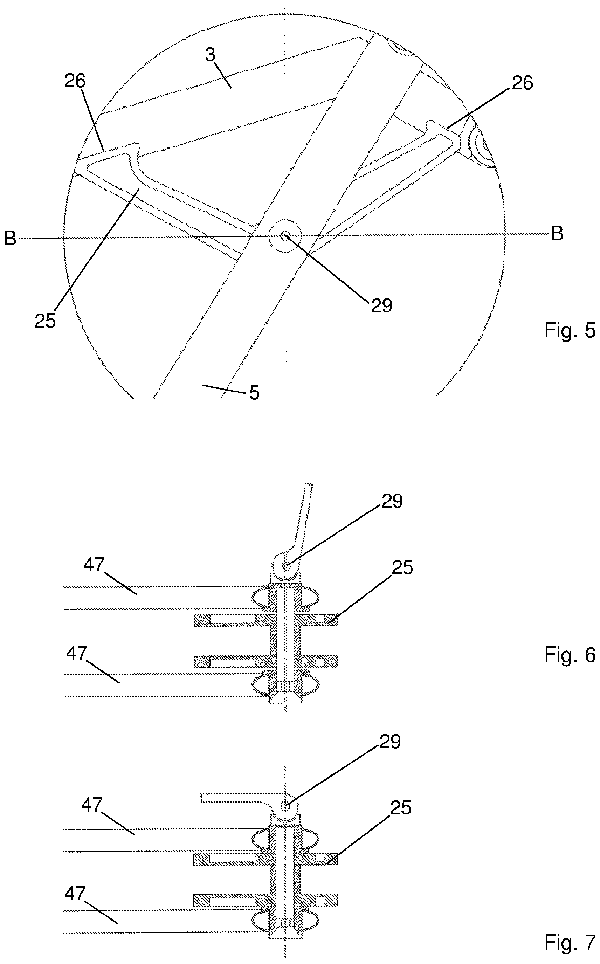

Im gezeigten Ausführungsbeispiel sind Oberrohr 3 und Unterrohr 5 mit dem Steuerrohr 4 gelenkig verbunden. Daher ist außerdem ein zweiter lösbarer Verriegelungsmechanismus vorgesehen, um im entfalteten Zustand des Fahrradrahmens das Oberrohr 3 mit dem Unterrohr 5 starr miteinander zu verbinden und die Lage des Oberrohrs 3, des Unterrohrs 5 sowie des Steuerrohrs 4 zueinander zu fixieren. Der zweite Verriegelungsmechanismus umfasst eine Strebe 25, die vorzugsweise im Wesentlichen V-, oder L-förmig ausgebildet ist und an zwei Befestigungsstellen 26 des Oberrohrs 3 mit diesem starr verbunden ist, wobei die Befestigungsstellen 26 in Längsrichtung 27 gesehen hintereinander angeordnet sind, vgl. Fig. 5. Bei betriebsbereitem Fahrrad weist die Strebe 25 vom Oberrohr 3 nach unten.

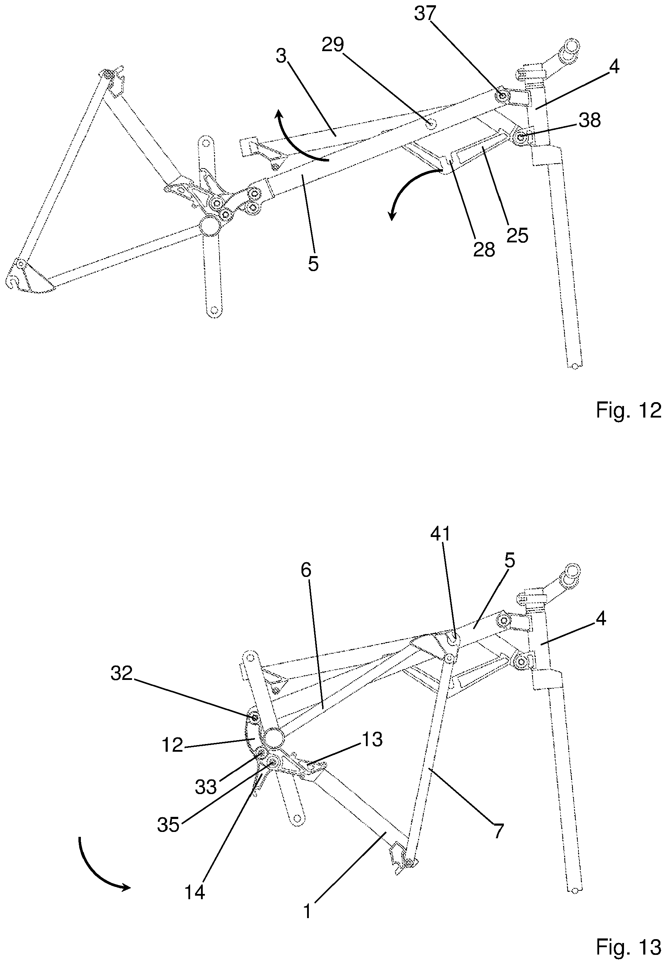

Weiters umfasst der zweite Verriegelungsmechanismus einen zweiten Schnellspanner 29, der im entfalteten Zustand des Fahrradrahmens in einem Verriegelungsschlitz 28 (vgl. Fig. 12) der Strebe 25 des Oberrohrs 3 angeordnet ist, wobei im entfalteten Zustand des Fahrradrahmens und in einem festgezogenen Zustand des zweiten Schnellspanners 29 das Unterrohr 5 gegen die Strebe 25 des Oberrohrs 3 gepresst ist.

Fig. 6 illustriert die Situation bei geöffnetem zweiten Schnellspanner 29. Hierbei ist gut zu erkennen, dass im gezeigten Ausführungsbeispiel das Unterrohr 5 zwei Arme 47 umfasst, zwischen denen die Strebe 25 stets abschnittsweise angeordnet ist. Indem das Unterrohr 5 sich im vorderen Bereich in die zwei Arme 47 teilt, wird ein Kreuzen von Oberrohr 3 und Unterrohr 5 in Längsrichtung 27 gesehen vor dem Steuerrohr 4 ermöglicht, indem das Oberrohr 3 zwischen den Armen 47 verlaufen kann.

Wie in Fig. 7 zu sehen ist, werden im entfalteten Zustand des Fahrradrahmens bei festgezogenem zweiten Schnellspanner 29 beide Arme 47 gegen die Strebe 25 gepresst. Hierdurch wiederum werden Oberrohr 3 und Unterrohr 5 im Wesentlichen spielfrei miteinander verbunden, und die Lage von Oberrohr 3, Unterrohr 5 und Steuerrohr 4 zueinander wird fixiert.

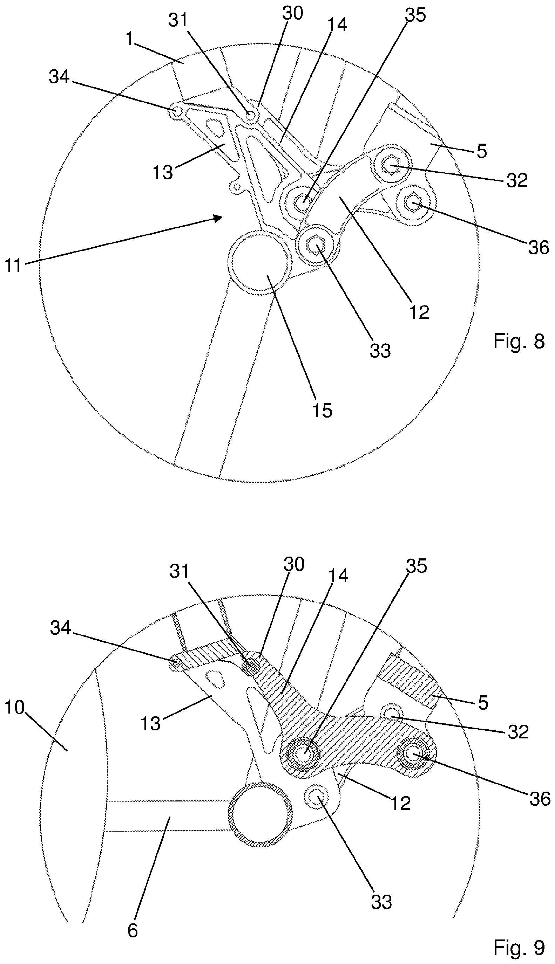

Fig. 8 zeigt eine vergrößerte Ansicht des Details DA3 aus Fig. 1. Wie in Fig. 8 und noch besser in der Schnittansicht der Fig. 9 zu erkennen ist, weist der mittlere Arm 14 der Kreuzstrebeneinheit 11 einen Einrastabschnitt 30 auf und das Sitzrohr 1 einen Einrastabschnitt 31, wobei im entfalteten Zustand des Fahrradrahmens die beiden Einrastabschnitte 30, 31 ineinander verrastet sind. Im gezeigten Ausführungsbeispiel ist der Einrastabschnitt 31 stiftförmig ausgeführt und der Einrastabschnitt 30 als Ausnehmung, in welcher der Stift aufgenommen werden kann.

Weiters ist in Fig. 8 erkennbar, dass die äußeren Arme 12 der Kreuzstrebeneinheit 11 am Unterrohr 5 um eine erste Drehachse 32 drehbar gelagert sind, dass die äußeren Arme 12 am Mittelteil 13 der Kreuzstrebeneinheit 11 um eine zweite Drehachse 33 drehbar gelagert sind, dass das Sitzrohr 1 am Mittelteil 13 um eine dritte Drehachse 34 drehbar gelagert ist, dass der innere Arm 14 der Kreuzstrebeneinheit 11 am Mittelteil 13 um eine vierte Drehachse 35 drehbar gelagert ist, dass der innerer Arm 14 am Unterrohr 5 um eine fünfte Drehachse 36 drehbar gelagert ist, und dass die Drehachsen 32, 33, 34, 35, 36 parallel zu einander sind. Die Drehachsen 32, 33, 34, 35, 36 stehen dabei normal auf die durch die Längsrichtung 27 und Längsachse 48 des Sitzrohrs 1 aufgespannte Ebene.

Oberrohr 3 und Unterrohr 5 sind ebenfalls um Drehachsen gelagert, das Oberrohr 3 um eine sechste Drehachse 37 und das Unterrohr um eine siebente Drehachse 38, vgl. Fig. 1. Im gezeigten Ausführungsbeispiel ist bei betriebsbereitem Fahrrad die sechste Drehachse 37 über der siebenten Drehachse 38 angeordnet. Die Drehachsen 37, 38 sind parallel zur ersten Drehachse 32.

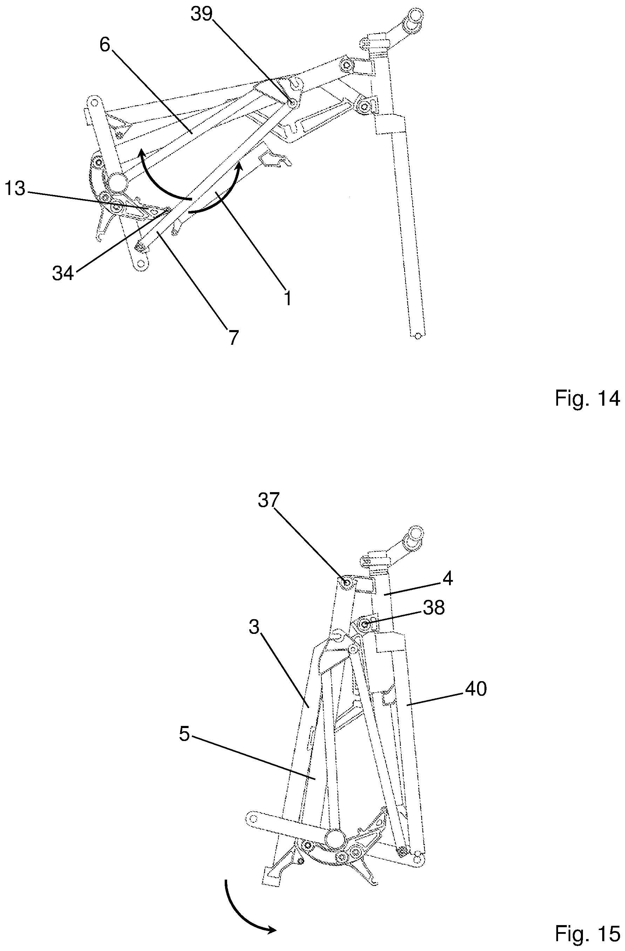

Schließlich sind auch die Sattelstreben 7 drehbar gelagert, nämlich um eine achte Drehachse 39, welche ebenfalls parallel zur ersten Drehachse 32 ist, vgl. Fig. 1 bzw. Fig. 14.

Wie im Folgenden noch ausgeführt werden wird, wird die Überführung des Fahrradrahmens vom entfalteten Zustand in den zusammengefalteten Zustand durch eine Abfolge von Schwenkbewegungen ermöglicht. D.h. man erhält einen äußerst platzsparend zusammengefalteten Fahrradrahmen, der im entfalteten Zustand trotzdem hohen Stabilitätsanforderungen gerecht wird.

### FUNKTIONSWEISE DER ERFINDUNG

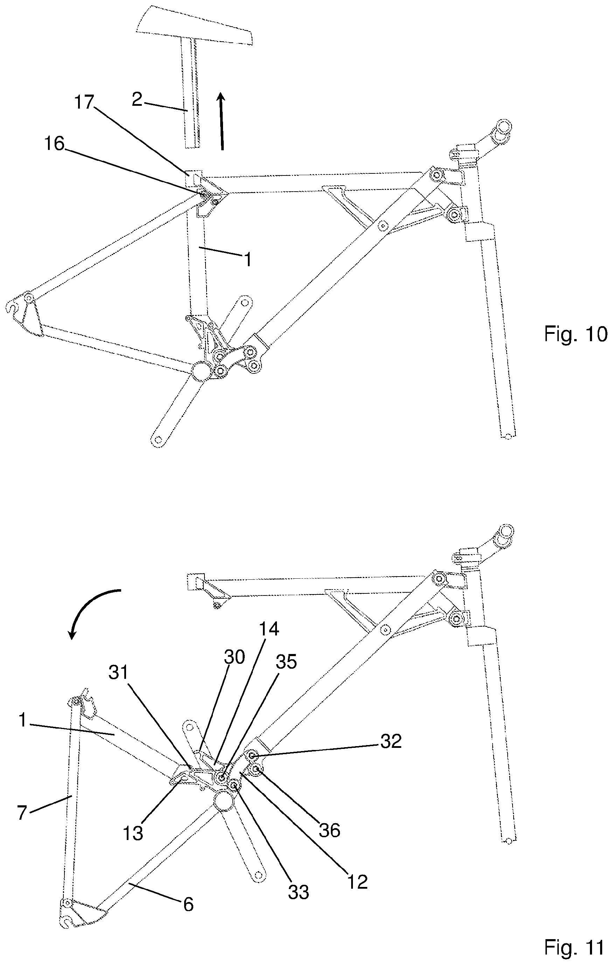

Fig. 10 zeigt den erfindungsgemäßen Fahrradrahmen des Ausführungsbeispiels der Fig. 1 mit gelöstem ersten Verriegelungsmechanismus. Die Sattelstütze 2 ist aus dem Sitzrohr 1 und der Durchführung 17 gezogen, was durch den Pfeil in Fig. 10 angedeutet ist. Somit kann der Hinterbau verschwenkt werden.

Hierbei findet einerseits eine Drehung des Mittelteils 13 relativ zu den Armen 12 um die zweite Drehachse 33 statt.

Gleichzeitig wird der Mittelteil 13 auch relativ zum inneren Arm 14 um die vierte Drehachse 35 gedreht, sodass die Einrastabschnitte 30, 31 nicht mehr länger ineinander verrastet sind. Weiters dreht sich auch der innere Arm 14 relativ zum Unterrohr 5 um die fünfte Drehachse 36. Schließlich findet auch eine geringfügige Drehung der Arme 12 relativ zum Unterrohr 5 um die erste Drehachse 32 statt. Den Zustand nach diesen Drehungen, die alle mit derselben Drehrichtung ablaufen, zeigt Fig. 11, wobei die Drehrichtung durch den Pfeil in Fig. 11 angedeutet ist (in der Abbildung gegen den Uhrzeigersinn).

Nun wird der zweite Verriegelungsmechanismus gelöst. Das Oberrohr 3 wird sodann um die siebente Drehachse 38 relativ zum Steuerrohr 4 nach unten gedreht, was in Fig. 12 durch den Pfeil mit Richtung gegen den Uhrzeigersinn angedeutet ist. Außerdem wird das Unterrohr 5 relativ zum Steuerrohr 4 um die sechste Drehachse 37 nach oben gedreht, was in Fig. 12 durch den Pfeil mit Richtung im Uhrzeigersinn angedeutet ist. Indem also das Oberrohr 3 und das Unterrohr 5 aufeinander zu bewegt werden, wird der zweite Schnellspanner 29 aus dem Verriegelungsschlitz 28 der Strebe 25 geführt. Fig. 12 zeigt den Zustand nach diesen Drehbewegungen von Oberrohr 3 und Unterrohr 5.

Es folgt ein erneutes Verschwenken des Hinterbaus, wobei Fig. 13 den Fahrradrahmen nach der Schwenkbewegung zeigt. Bei dieser Schwenkbewegung drehen die Arme 12 relativ zum Unterrohr 5 um die erste Drehachse 32. Der Mittelteil 13 dreht relativ zu den Armen 12 um die zweite Drehachse 33 und relativ zum inneren Arm 14 um die vierte Drehachse 35. Weiters dreht der innere Arm 14 relativ zum Unterrohr 5 um die fünfte Drehachse 36 (in Fig. 13 nicht sichtbar). Diese Drehbewegungen laufen wiederum in derselben Drehrichtung ab, die in Fig. 13 durch den Pfeil mit Richtung gegen den Uhrzeigersinn angedeutet ist. Der Hinterbau wird also sukzessive bei gleichbleibender Drehrichtung gedreht bzw. gefaltet und auf das Steuerrohr 4 zu bewegt. Im Stadium des Zusammenfaltvorgangs, welches in Fig. 13 gezeigt ist, befinden sich die Ausfallenden 41 bereits über dem Unterrohr 5.

Nun folgt ein Zusammenfalten des Hinterbaus. Hierbei werden die Sattelstreben 7 um die achte Drehachse 39 in Richtung Kettenstreben 6 gedreht, was in Fig. 14 durch den Pfeil mit Richtung im Uhrzeigersinn angedeutet ist. Außerdem wird das Sitzrohr 1 eingeklappt, indem es relativ zum Mittelteil 13 um die dritte Drehachse 34 gedreht wird, was in Fig. 14 durch den Pfeil mit Richtung gegen den Uhrzeigersinn angedeutet ist.

Schließlich erfolgt ein erneutes Verschwenken von Oberrohr 3 und Unterrohr 5 um die siebente Drehachsen 38 und die sechste Drehachse 37. Beide Drehungen werden dabei in derselben Drehrichtung ausgeführt, sodass Oberrohr 3 und Unterrohr 5 und damit auch der gesamte Hinterbau auf das Steuerrohr 4 bzw. die Gabel 40 zu bewegt werden. Fig. 15 zeigt den Fahrradrahmen nach diesen Drehungen, wobei der Pfeil mit Richtung gegen den Uhrzeigersinn die Drehrichtung andeutet.

Zur Wiederherstellung des entfalteten Zustands des Fahrradrahmens ist in umgekehrter Weise vorzugehen.

### BEZUGSZEICHENLISTE

- 1: Sitzrohr
- 2: Sattelstütze
- 3: Oberrohr
- 4: Steuerrohr
- 5: Unterrohr
- 6: Kettenstrebe
- 7: Sattelstrebe
- 8: Sattel
- 9: Vorderes Laufrad
- 10: Hinteres Laufrad
- 11: Kreuzstrebeneinheit
- 12: Äußerer Arm der Kreuzstrebeneinheit
- 13: Mittelteil der Kreuzstrebeneinheit
- 14: Innerer Arm der Kreuzstrebeneinheit
- 15: Tretlager
- 16: Schnellspanner
- 17: Durchführung für Sattelstütze
- 18: Klemmbacke
- 19: Abgeschrägte Fläche der Sattelstütze
- 20: Abgeschrägte Fläche der Klemmbacke
- 21: Anschlagelement des Oberrohrs
- 22: Anschlagelement des Sitzrohrs
- 23: Rastabschnitt des Anschlagelements des Oberrohrs
- 24: Rastabschnitt des Anschlagelements des Sitzrohrs
- 25: Strebe des Oberrohrs
- 26: Befestigungsstelle am Oberrohr zur Befestigung der Strebe des Oberrohrs
- 27: Längsrichtung des Fahrradrahmens
- 28: Verriegelungsschlitz der Strebe des Oberrohrs
- 29: Zweiter Schnellspanner
- 30: Einrastabschnitt des mittleren Arms der Kreuzstrebeneinheit
- 31: Einrastabschnitt des Sitzrohrs
- 32: Erste Drehachse
- 33: Zweite Drehachse
- 34: Dritte Drehachse
- 35: Vierte Drehachse
- 36: Fünfte Drehachse
- 37: Sechste Drehachse
- 38: Siebente Drehachse
- 39: Achte Drehachse
- 40: Gabel
- 41: Ausfallende
- 42: Achse des hinteren Laufrads
- 43: Lenker
- 44: Lenkervorbau
- 45: Gabelschaft
- 46: Schnellspanner am Lenkervorbau
- 47: Arm des Unterrohrs
- 48: Längsachse des Sitzrohrs

## Patentansprüche

1. Zusammenfaltbarer Fahrradrahmen umfassend ein Sitzrohr (1) zur Aufnahme einer Sattelstütze (2), ein Oberrohr (3), ein Steuerrohr (4), ein Unterrohr (5), zwei Kettenstreben (6) und zwei Sattelstreben (7), wobei ein erster lösbarer Verriegelungsmechanismus vorgesehen ist, um in einem entfalteten Zustand des Fahrradrahmens die Sattelstütze (2), das Sitzrohr (1), das Oberrohr (3) und die Sattelstreben (7) starr und lösbar miteinander zu verbinden und deren Lage zueinander zu fixieren, **dadurch gekennzeichnet, dass** weiters das Oberrohr (3) und das Unterrohr (5) mit dem Steuerrohr (4) jeweils gelenkig verbunden sind und dass ein zweiter lösbarer Verriegelungsmechanismus vorgesehen ist, um im entfalteten Zustand des Fahrradrahmens das Oberrohr (3) mit dem Unterrohr (5) starr miteinander zu verbinden und die Lage des Oberrohrs (3), des Unterrohrs (5) sowie des Steuerrohrs (4) zueinander zu fixieren.

2. Zusammenfaltbarer Fahrradrahmen nach Anspruch 1, **dadurch gekennzeichnet, dass** eine Kreuzstrebeneinheit (11) vorgesehen ist, welche zwei äußere Arme (12), einen Mittelteil (13) zur Aufnahme eines Tretlagers (15) und einen inneren Arm (14) umfasst, wobei die äußeren Arme (12) gelenkig an das Unterrohr (5) angebunden sind.

3. Zusammenfaltbarer Fahrradrahmen nach Anspruch 2, **dadurch gekennzeichnet, dass** die äußeren Arme (12) der Kreuzstrebeneinheit (11) deren Mittelteil (13) mit dem Unterrohr (5) gelenkig verbinden, dass der Mittelteil (13) mit den Kettenstreben (6) starr und mit dem Sitzrohr (1) gelenkig verbunden ist und dass der innere Arm (14) sowohl mit dem Unterrohr (5) als auch mit dem Mittelteil (13) gelenkig verbunden ist.

4. Zusammenfaltbarer Fahrradrahmen nach einem der Ansprüche 1 bis 3, **dadurch gekennzeichnet, dass** der erste Verriegelungsmechanismus umfasst: eine am Oberrohr (3) befestigte Durchführung (17) zur Aufnahme der Sattelstütze (2) im entfalteten Zustand des Fahrradrahmens;
ein am Oberrohr (3) befestigtes Anschlagelement (21) mit einem Rastabschnitt (23) und ein am Sitzrohr (1) befestigtes Anschlagelement (22) mit einem Rastabschnitt (24), wobei im entfalteten Zustand des Fahrradrahmens die beiden Anschlagelemente (21, 22) mittels ihrer Rastabschnitte (23, 24) ineinander verrastet sind;
Klemmbacken (18), die einerseits zwischen den Sattelstreben (7) angeordnet sind und andererseits, im entfalteten Zustand des Fahrradrahmens und bei im Sitzrohr (1) aufgenommener Sattelstütze (2), zwischen der Sattelstütze (2) und den Anschlagelementen (21, 22) angeordnet sind;
einen Spanner, vorzugsweise Schnellspanner (16), wobei in einem festgezogenen Zustand des Spanners (16) die Sattelstreben (7) gegen die Klemmbacken (8) gepresst sind.

5. Zusammenfaltbarer Fahrradrahmen nach Anspruch 4, **dadurch gekennzeichnet, dass** die Sattelstütze (2) abgeschrägte Flächen (19) aufweist, dass die Klemmbacken (18) abgeschrägte Flächen (20) aufweisen, mit welchen sie im entfalteten Zustand des Fahrradrahmens, bei im Sitzrohr (1) aufgenommener Sattelstütze (2) und im festgezogenen Zustand des Spanners (16) gegen die abgeschrägten Flächen (19) der Sattelstütze (2) gepresst sind,
wobei die abgeschrägten Flächen (19, 20) der Sattelstütze (2) und der Klemmbacken (18) so ausgelegt sind, dass die Klemmbacken (18) im entfalteten Zustand des Fahrradrahmens, bei im Sitzrohr (1) aufgenommener Sattelstütze (2) und im festgezogenen Zustand des Spanners (16) außerdem gegen das Anschlagelement (21) des Oberrohrs (3) und gegen das Anschlagelement (22) des Sitzrohrs (1) gepresst sind.

6. Zusammenfaltbarer Fahrradrahmen nach einem der Ansprüche 1 bis 5, **dadurch gekennzeichnet, dass** der zweite Verriegelungsmechanismus umfasst: eine Strebe (25), die vorzugsweise im Wesentlichen V-, U- oder L-förmig ausgebildet ist und an zwei Befestigungsstellen (26) des Oberrohrs (3) mit diesem starr verbunden ist, wobei die Befestigungsstellen (26) in einer Längsrichtung (27) des Fahrradrahmens gesehen hintereinander angeordnet sind;
einen zweiten Spanner, vorzugsweise zweiten Schnellspanner (29), der im entfalteten Zustand des Fahrradrahmens in einem Verriegelungsschlitz (28) der Strebe (25) des Oberrohrs (3) angeordnet ist, wobei im entfalteten Zustand des Fahrradrahmens und in einem festgezogenen Zustand des zweiten Spanners (29) das Unterrohr (5) gegen die Strebe (25) des Oberrohrs (3) gepresst ist.

7. Zusammenfaltbarer Fahrradrahmen nach Anspruch 6, **dadurch gekennzeichnet, dass** das Unterrohr (5) zwei Arme (47) aufweist, zwischen denen im entfalteten Zustand des Fahrradrahmens die Strebe (25) des Oberrohrs (3) abschnittsweise angeordnet ist, und dass im entfalteten Zustand des Fahrradrahmens und im festgezogenen Zustand des zweiten Spanners (29) beide Arme (47) des Unterrohrs (5) gegen die Strebe (25) des Oberrohrs (3) gepresst sind.

8. Zusammenfaltbarer Fahrradrahmen nach einem der Ansprüche 2 bis 7, **dadurch gekennzeichnet, dass** der mittlere Arm (14) der Kreuzstrebeneinheit (11) einen Einrastabschnitt (30) aufweist, dass das Sitzrohr (1) einen Einrastabschnitt (31) aufweist und dass im entfalteten Zustand des Fahrradrahmens die beiden Einrastabschnitte (30, 31) ineinander verrastet sind.

9. Zusammenfaltbarer Fahrradrahmen nach einem der Ansprüche 2 bis 8, **dadurch gekennzeichnet, dass** die äußeren Arme (12) der Kreuzstrebeneinheit (11) am Unterrohr (5) um eine erste Drehachse (32) drehbar gelagert sind,
dass die äußeren Arme (12) der Kreuzstrebeneinheit (11) am Mittelteil (13) der Kreuzstrebeneinheit (11) um eine zweite Drehachse (33) drehbar gelagert sind,
dass das Sitzrohr (1) am Mittelteil (13) der Kreuzstrebeneinheit (11) um eine dritte Drehachse (34) drehbar gelagert ist,
dass der innere Arm (14) der Kreuzstrebeneinheit (11) am Mittelteil (13) der Kreuzstrebeneinheit (11) um eine vierte Drehachse (35) drehbar gelagert ist,
dass der innerer Arm (14) der Kreuzstrebeneinheit (11) am Unterrohr (5) um eine fünfte Drehachse (36) drehbar gelagert ist,
und dass die erste Drehachse (32), die zweite Drehachse (33), die dritte Drehachse (34), die vierte Drehachse (35) und die fünfte Drehachse (36) parallel zu einander sind.

10. Zusammenfaltbarer Fahrradrahmen nach Anspruch 9, **dadurch gekennzeichnet, dass** das Unterrohr (5) relativ zum Steuerrohr (4) um eine sechste Drehachse (37) drehbar gelagert ist,
dass das Oberrohr (3) relativ zum Steuerrohr (4) um eine siebente Drehachse (38) drehbar gelagert ist
und dass die sechste Drehachse (37) und die siebente Drehachse (38) parallel zur ersten Drehachse (32) sind.

11. Zusammenfaltbarer Fahrradrahmen nach einem der Ansprüche 1 bis 10, **dadurch gekennzeichnet, dass** die Sattelstreben (7) mit den Kettenstreben (6) gelenkig verbunden sind.

12. Zusammenfaltbarer Fahrradrahmen nach Anspruch 11 und Anspruch 9, **dadurch gekennzeichnet, dass** die Sattelstreben (7) relativ zu den Kettenstreben (6) um eine achte Drehachse (39) drehbar gelagert sind, wobei die achte Drehachse (39) parallel zur ersten Drehachse (32) ist.

13. Fahrrad mit einem zusammenfaltbaren Fahrradrahmen nach einem der Ansprüche 1 bis 12, das Fahrrad umfassend ein vorderes Laufrad (9) und ein hinteres Laufrad (10), eine Gabel (40) mit einem Gabelschaft (45) sowie einen Lenker (43) und einen Lenkervorbau (44), der Lenker und Gabelschaft (45) verbindet.

14. Fahrrad nach Anspruch 13, **dadurch gekennzeichnet, dass** ein Schnellspanner (46) vorgesehen ist, um den Lenker (43) mit Lenkervorbau (44) am Gabelschaft (45) lösbar zu fixieren.

## Claims

1. A foldable bicycle frame, comprising a seat tube (1) for accommodating a seat post (2), an upper tube (3), a head tube (4), a lower tube (5), two chain stays (6) and two seat stays (7), wherein a first releasable locking mechanism is provided in order to connect, in an unfolded state of the bicycle frame, the seat post (2), the seat tube (1), the upper tube (3) and the seat stays (7) in a rigid and detachable manner to each other and to fix the position to each other, **characterized in that** further the upper tube (3) and the lower tube (5) are each connected to the head tube (4) in an articulated manner, and that a second releasable locking mechanism is provided in order to rigidly connect, in the unfolded state of the bicycle frame, the upper tube (3) and the lower tube (5) to each other and to fix the position of the upper tube (3), the lower tube (5) and the head tube (4) to each other.

2. A foldable bicycle frame according to claim 1, **characterized in that** a cross-strut unit (11) is provided, which comprises two outer arms (12), a middle part (13) for accommodating a bottom bracket bearing (15) and an inner arm (14), wherein the outer arms (12) are attached in an articulated manner to the lower tube (5).

3. A foldable bicycle frame according to claim 2, **characterized in that** the outer arms (12) of the cross-strut unit (11) connect its middle part (13) to the lower tube (5) in an articulated manner, that the middle part (13) is connected to the chain stays (6) in a rigid manner and to the seat tube (1) in an articulated manner, and that the inner arm (14) is connected in an articulated manner both to the lower tube (5) and also to the middle part (13).

4. A foldable bicycle frame according to one of the claims 1 to 3, **characterized in that** the first locking mechanism comprises: a lead-through (17) fixed to the upper tube (3) for accommodating the seat post (2) in the unfolded state of the bicycle frame;
a stop element (21) which is fixed to the upper tube (3) and comprises a latching section (23), a stop element (22) which is fixed to the seat tube (1) and comprises a latching section (24), wherein, in the unfolded state of the bicycle frame, the two stop elements (21, 22) are latched into each other by means of their latching sections (23, 24);
clamping jaws (18), which are arranged on the one hand between the seat stays (7) and which are arranged on the other hand, in the unfolded state of the bicycle frame and when the seat post (2) is accommodated in the seat tube (1), between the seat post (2) and the stop elements (21, 22);
a toggle clamp, preferably a quick-action toggle clamp (16), wherein the seat stays (7) are pressed against the clamping jaws (8) in a tightened state of the toggle clamp (16).

5. A foldable bicycle frame according to claim 4, **characterized in that** the seat post (2) comprises bevelled surfaces (19), that the clamping jaws (18) comprise bevelled surfaces (20) with which they are pressed against the bevelled surfaces (19) of the seat post (2) in the unfolded state of the bicycle frame, when the seat post (2) is accommodated in the seat tube (1), and when the toggle clamp (16) is in the tightened state,
wherein the bevelled surfaces (19, 20) of the seat post (2) and of the clamping jaws (18) are formed in such a way that the clamping jaws (18) are further pressed against the stop element (21) of the upper tube (3) and against the stop element (22) of the seat tube (1) in the unfolded state of the bicycle frame, when the seat post (2) is accommodated in the seat tube (1), and when the toggle clamp (16) is in the tightened state.

6. A foldable bicycle frame according to one of the claims 1 to 5, **characterized in that** the second locking mechanism comprises: a strut (25), which is preferably formed in a substantially V-shaped, U-shaped or L-shaped manner, and is rigidly connected to the upper tube (3) at two fastening points (26) thereof, wherein the fastening points (26) are arranged one behind the other as viewed in a longitudinal direction (27) of the bicycle frame;
a second toggle clamp, preferably a second quick-action toggle clamp (29), which in the unfolded state of the bicycle frame is arranged in a locking slot (28) of the strut (25) of the upper tube (3), wherein the lower tube (5) is pressed against the strut (25) of the upper tube (3) in the unfolded state of the bicycle frame and in the tightened state of the second quick-action toggle clamp (29).

7. A foldable bicycle frame according to claim 6, **characterized in that** the lower tube (5) comprises two arms (47), between which, in the unfolded state of the bicycle frame, the strut (25) of the upper tube (3) is arranged in sections, and that both arms (47) of the lower tube (5) are pressed against the strut (25) of the upper tube (3) in the unfolded state of the bicycle frame and when the second toggle clamp (29) is tightened.

8. A foldable bicycle frame according to one of the claims 2 to 7, **characterized in that** the middle arm (14) of the cross-strut unit (11) comprises a latching section (30), that the seat tube (1) comprises a latching section (31), and that the two latching sections (30, 31) are latched into each other in the unfolded state of the bicycle frame.

9. A foldable bicycle frame according to one of the claims 2 to 8, **characterized in that** the outer arms (12) of the cross-strut unit (11) are rotatably mounted on the lower tube (5) about a first rotational axis (32),
that the outer arms (12) of the cross-strut unit (11) are rotatably mounted on the middle part (13) of the cross-strut unit (11) about a second rotational axis (33),
that the seat tube (1) is rotatably mounted on the middle part (13) of the cross-strut unit (11) about a third rotational axis (34),
that the inner arm (14) of the cross-strut unit (11) is rotatably mounted on the middle part (13) of the cross-strut unit (11) about a fourth rotational axis (35),
that the inner arm (14) of the cross-strut unit (11) is rotatably mounted on the lower tube (5) about a fifth rotational axis (36),
and that the first rotational axis (32), the second rotational axis (33), the third rotational axis (34), the fourth rotational axis (35) and the fifth rotational axis (36) are parallel to each other.

10. A foldable bicycle frame according to claim 9, **characterized in that** the lower tube (5) is rotatably mounted relative to the head tube (4) about a sixth rotational axis (37),
that the upper tube (3) is rotatably mounted relative to the head tube (4) about a seventh rotational axis (38),
and that the sixth rotational axis (37) and the seventh rotational axis (38) are parallel to the first rotational axis (32).

11. A foldable bicycle frame according to one of the claims 1 to 10, **characterized in that** the seat stays (7) are connected to the chain stays (6) in an articulated manner.

12. A foldable bicycle frame according to claim 11 and claim 9, **characterized in that** the seat stays (7) are rotatably mounted relative to the chain stays (6) about a eighth rotational axis (39), wherein the eighth rotational axis (39) is parallel to the first rotational axis (32).

13. A bicycle with a foldable bicycle frame according to one of the claims 1 to 12, the bicycle comprising a front wheel (9) and a rear wheel (10), a fork (40) with a steer tube (45), as well as a handlebar (43) and a handlebar stem (44) which connects the handlebar and the steer tube (45).

14. A bicycle according to claim 13, **characterized in that** a quick-action toggle clamp (46) is provided in order to releasably fix the handlebar (43) with the handlebar stem (44) to the steer tube (45).

## Revendications

1. Cadre de vélo pliable comprenant un tube de selle (1) destiné à recevoir un support de selle (2), un tube supérieur (3), un tube de direction (4), un tube inférieur (5), deux bases de chaîne (6) et deux haubans de selle (7), dans lequel est prévu un premier mécanisme de verrouillage pouvant être défait pour relier le support de selle (2), le tube de selle (1), le tube supérieur (3) et les haubans de selle (7) de façon rigide et pouvant être défaite dans un état déplié du cadre de vélo et fixer leur position les uns par rapport aux autres, **caractérisé en ce que** le tube supérieur (3) et le tube inférieur (5) sont en outre articulés avec le tube de direction (4) et **en ce qu'**il est prévu un deuxième mécanisme de verrouillage pouvant être défait pour relier le tube supérieur (3) au tube inférieur (5) de façon rigide quand le cadre de vélo est déplié et fixer la position du tube supérieur (3), du tube inférieur (5) et du tube de direction (4) les uns par rapport aux autres.

2. Cadre de vélo pliable selon la revendication 1, **caractérisé en ce qu'**il est prévu une unité de croisillon (11) comprenant deux bras extérieurs (12), une partie centrale (13) pour recevoir un pédalier (15) et un bras intérieur (14), les bras extérieurs (12) étant articulés sur le tube inférieur (5).

3. Cadre de vélo pliable selon la revendication 2, **caractérisé en ce que** les bras extérieurs (12) de l'unité de croisillon (11) relient la partie centrale (13) de celle-ci avec le tube inférieur (5) de façon articulée, **en ce que** la partie centrale (13) est reliée de façon rigide avec les bases de chaîne (6) et de façon articulée avec le tube de selle (1) et **en ce que** le bras intérieur (14) est articulé aussi bien avec le tube inférieur (5) qu'avec la partie centrale (13).

4. Cadre de vélo pliable selon l'une des revendications 1 à 3, **caractérisé en ce que** le premier mécanisme de verrouillage comprend une traversée (17) fixée au tube supérieur (3) pour recevoir le support de selle (2) quand le cadre de vélo est déplié, un élément de butée (21) fixé au tube supérieur (3) avec une partie d'enclenchement (23) et un élément de butée (22) fixé au tube de selle (1) avec une partie d'enclenchement (24), les deux éléments de butée (21, 22) étant enclenchés l'un dans l'autre au moyen de leurs parties d'enclenchement (23, 24) quand le cadre de vélo est déplié, des mors de serrage (18) disposés, d'une part, entre les haubans de selle (7) et, d'autre part, quand le cadre de vélo est déplié et le support de selle (2) logé dans le tube de selle (1), entre le support de selle (2) et les éléments de butée (21, 22), un levier de serrage, de préférence un levier de serrage rapide (16), les haubans de selle (7) étant pressées contre le mors de serrage (8) quand le levier de serrage (16) est serré.

5. Cadre de vélo pliable selon la revendication 4, **caractérisé en ce que** le support de selle (2) présente des surfaces biseautées (19), **en ce que** les mors de serrage (18) présentent des surfaces biseautées (20) avec lesquelles ils sont pressés contre les surfaces biseautées (19) du support de selle (2) quand le cadre de vélo est déplié, le support de selle (2) logé dans le tube de selle (1) et le levier de serrage (16) serré, les surfaces biseautées (19, 20) du support de selle (2) et des mors de serrage (18) étant conformées de telle sorte que lorsque le cadre de vélo est déplié, le support de selle (2) logé dans le tube de selle (1) et le levier de serrage (16) serré, les mors de serrage (18) sont en outre pressés contre l'élément de butée (21) du tube supérieur (3) et contre l'élément de butée (22) du tube de selle (1).

6. Cadre de vélo pliable selon l'une des revendications 1 à 5, **caractérisé en ce que** le deuxième mécanisme de verrouillage comprend : une entretoise (25), de préférence sensiblement en forme de V, de U ou de L et reliée de façon rigide au tube supérieur (3) en deux points de fixation (26) de celui-ci, les points de fixation (26) étant disposés l'un derrière l'autre dans un sens longitudinal (27) du cadre de vélo ;
un deuxième levier de serrage, de préférence un deuxième levier de serrage rapide (29), qui est disposé, quand le cadre de vélo est déplié, dans une fente de verrouillage (28) de l'entretoise (25) du tube supérieur (3), le tube inférieur (5) étant pressé contre l'entretoise (25) du tube supérieur (3) quand le cadre de vélo est déplié et le deuxième levier de serrage (29) serré.

7. Cadre de vélo pliable selon la revendication 6, **caractérisé en ce que** le tube inférieur (5) présente deux bras (47) entre lesquels l'entretoise (25) du tube supérieur (3) est disposée par sections quand le cadre de vélo est déplié et **en ce que** les deux bras (47) du tube inférieur (5) sont pressés contre l'entretoise (25) du tube supérieur (3) quand le cadre de vélo est déplié et le deuxième levier de serrage (29) serré.

8. Cadre de vélo pliable selon l'une des revendications 2 à 7, **caractérisé en ce que** le bras médian (14) de l'unité de croisillon (11) présente une section d'enclenchement (30), **en ce que** le tube de selle (1) présente une section d'enclenchement (31) et **en ce que** les deux sections d'enclenchement (30, 31) sont enclenchées l'une dans l'autre quand le cadre de vélo est déplié.

9. Cadre de vélo pliable selon l'une des revendications 2 à 8, **caractérisé en ce que** les bras extérieurs (12) de l'unité de croisillon (11) sont supportés sur le tube inférieur (5) avec possibilité de rotation autour d'un premier axe de rotation (32),
**en ce que** les bras extérieurs (12) de l'unité de croisillon (11) sont supportés sur la partie centrale (13) de l'unité de croisillon (11) avec possibilité de rotation autour d'un deuxième axe de rotation (33),
**en ce que** le tube de selle (1) est supporté sur la partie centrale (13) de l'unité de croisillon (11) avec possibilité de rotation autour d'un troisième axe de rotation (34),
**en ce que** le bras intérieur (14) de l'unité de croisillon (11) est supporté sur la partie centrale (13) de l'unité de croisillon (11) avec possibilité de rotation autour d'un quatrième axe de rotation (35),
**en ce que** le bras intérieur (14) de l'unité de croisillon (11) est supporté sur le tube inférieur (5) avec possibilité de rotation autour d'un cinquième axe de rotation (36),
et **en ce que** le premier axe de rotation (32), le deuxième axe de rotation (33), le troisième axe de rotation (34), le quatrième axe de rotation (35) et le cinquième axe de rotation (36) sont parallèles les uns aux autres.

10. Cadre de vélo pliable selon la revendication 9, **caractérisé en ce que** le tube inférieur (5) est supporté avec possibilité de rotation autour d'un sixième axe de rotation (37) par rapport au tube de direction (4),
**en ce que** le tube supérieur (3) est supporté avec possibilité de rotation autour d'un septième axe de rotation (38) par rapport au tube de direction (4)
et **en ce que** le sixième axe de rotation (37) et le septième axe de rotation (38) sont parallèles au premier axe de rotation (32).

11. Cadre de vélo pliable selon l'une des revendications 1 à 10, **caractérisé en ce que** les haubans de selle (7) sont reliés de façon articulée aux bases de chaîne (6).

12. Cadre de vélo pliable selon la revendication 11 et la revendication 9, **caractérisé en ce que** les haubans de selle (7) sont supportés avec possibilité de rotation autour d'un huitième axe de rotation (39) par rapport aux bases de chaîne (6), le huitième axe de rotation (39) étant parallèle au premier axe de rotation (32).

13. Vélo possédant un cadre de vélo pliable selon l'une des revendications 1 à 12, lequel vélo comprend une roue avant (9) et une roue arrière (10), une fourche (40) avec un pivot de fourche (45) ainsi qu'un guidon (43) et une potence de guidon (44) qui relie le guidon et le pivot de fourche (45).

14. Vélo selon la revendication 13, **caractérisé en ce qu'**un levier de serrage rapide (46) est prévu pour fixer le guidon (43) avec la potence de guidon (44) au pivot de fourche (45) d'une manière pouvant être défaite.
